Europäisches Patentamt

**European Patent Office**

Office européen des brevets

(11) Publication number : **0 369 557 B1**

(12) **EUROPEAN PATENT SPECIFICATION**

(45) Date of publication of patent specification :
23.09.92 Bulletin 92/39

(51) Int. Cl.⁵ : **B63B 59/04**

(21) Application number : **89250075.2**

(22) Date of filing : **07.11.89**

(54) **Anti-fouling system for objects in contact with seawater.**

(30) Priority : **14.11.88 JP 287190/88**
**01.06.89 JP 139973/89**

(43) Date of publication of application :
**23.05.90 Bulletin 90/21**

(45) Publication of the grant of the patent :
**23.09.92 Bulletin 92/39**

(84) Designated Contracting States :
**DE FR GB IT NL SE**

(56) References cited :
**FR-A- 2 391 904**
**NAVY TECHNICAL DISCLOSURE BULLETIN,**
**vol. 5, no. 5, May 1980, pages 33-38, navy case**
**no. 64135; T.R. KRETSCHMER et**
**al.:"Prevention on removal of marine environ-**
**ment biofouling"**
**PATENT ABSTRACTS OF JAPAN, vol. 12, no.**
**343 (M-741)[3190], 14th September 1988; &**
**JP-A-63 103 789 (MITSUBISHI)**

(73) Proprietor : **MITSUBISHI JUKOGYO**
**KABUSHIKI KAISHA**
**5-1, Marunouchi 2-chome Chiyoda-ku**
**Tokyo (JP)**

(72) Inventor : **Usami, Masahiro c/o Nagasaki**
**Technical Inst.**
**Mitsubishi Jukogyo K.K. 1-1, Akunoura-machi**
**Nagasaki Nagasaki Pref. (JP)**
Inventor : **Ueda, Kenji c/o Nagasaki Technical**
**Inst.**
**Mitsubishi Jukogyo K.K. 1-1, Akunoura-machi**
**Nagasaki Nagasaki Pref. (JP)**
Inventor : **Tomoshige, Kiyomi Nagasaki**
**Shipyard Engine Works**
**Mitsubishi Jukogyo K.K. 1-1, Akunoura-machi**
**Nagasaki Nagasaki Pref. (JP)**
Inventor : **Ohta, Shozo c/o Chouryou**
**Engineerung K.K.**
**Ryoukou-biru Bekkan 5 Floor 5-7,**
**Akunoura-machi**
**Nagasaki Nagasaki Pref. (JP)**
Inventor : **Horiguchi, Tsutomu c/o Chouryou**
**Engineerung K.K.**
**Ryoukou-biru Bekkan 5 Floor 5-7,**
**Akunoura-machi**
**Nagasaki Nagasaki Pref. (JP)**
Inventor : **Yamazaki, Hiroshi c/o Chouryou**
**Engineerung K.K.**
**Ryoukou-biru Bekkan 5 Floor 5-7,**
**Akunoura-machi**
**Nagasaki Nagasaki Pref. (JP)**

(74) Representative : **Meissner, Peter E., Dipl.-Ing.**
**et al**
**Patentanwälte Dipl.-Ing. Walter Meissner**
**Dipl.-Ing. Peter E. Meissner Dipl.-Ing.**
**Hans-Joachim Presting Herbertstrasse 22**
**W-1000 Berlin 33 (DE)**

EP 0 369 557 B1

Jouve, 18, rue Saint-Denis, 75001 PARIS

## Description

## 1. FIELD OF THE INVENTION AND RELATED ART STATEMENT:

The present invention relates to an anti-fouling system for objects in contact with seawater such as ships, offshore structures, undersea structures, bridge beams, rearing crawls, quaywalls, canals, gates, power plants, water intake-drainage pipes, water intake-drainage ducts, etc.

In order to prevent fouling on objects such as ships, offshore structures and the like being in contact with seawater, the method to coat the areas contacting with seawater with anti-fouling paint has been generally used.

There are, however, following drawbacks in this method.

(I) The conventional method can comply with changes in seasons, ocean currents, and water quality with flexibility due to its inability to control the elusion speed of antifouling chemicals.

(2) As the poison content in the anti-fouling paint is not permitted to exceed a limit, the anti-fouling paint must be recoated every two years.

Upon this, the applicant has developed an equipment to generate effective antifouling chemicals to prevent adhesion of marine organism wherein insulating paints 3 such as epoxy resin and conductive paints 5 in which carbon powder is mixed with the organic binder are coated on a structure I in contact with seawater 2, and direct current is supplied from a power source box 7 between the conductive paints 5 and an electric conductor 6 composed of steel and the like with the conductive paints 5 as an anode and the electric conductor 6 as a cathode wherein the effective antifouling chemicals are generated on the conductive paints 5, which is shown in FIG. I0 and disclosed in Japanese Patent Provisional Publication No. 63-I0I464 (No. I0I464 I988) and No. 63-I03789 (No. I03789 I988).

However, it has become clear that this method has the following disadvantages;

(I) Though electric current density in seawater 2 must be maintained at a fixed value, due to a rise in resistance caused by consumption of the conductive paints 5, electric current density tends to be concentrated near to a connecting terminal which makes the effective anti-fouling range narrow.

(2) Due to a difference in electric current density caused by irregularity of thickness of the conductive paints 5, it is hard to maintain an expected performance.

(3) The conductive paints of low resistance are required for uniforming of electric current density. To produce the paints of such properties, a large quantity of conductive powder must be mixed which makes the production troublesome.

(4) Because the effective anti-fouling range, a reaching distance of electric current density required for prevention of fouling, is short, the system is difficult to apply to large-size structures.

## 2. OBJECT AND SUMMARY OF THE INVENTION:

It is therefore one of the objects of this invention to provide an anti-fouling system for the objects in contact with seawater wherein a rise in resistance caused by consumption of the conductive paints is prevented and the problem of non-uniforming of electric current distribution due to iregularity of thickness of the conductive paints is solved and a high performance of prevention of fouling owing to low-resistant conductive paints is achieved.

It is another object of the current invention to provide the anti-fouling system for the objects in contact with seawater in which the capacity of direct current power source is reduced without having the electric conductor (e.g. a cathode) equipped separately and by which large-sized structures can be protected at a lower cost.

It is a further object of this invention to provide the anti-fouling system for the object in contact with seawater wherein the application cost for the conductive paints is reduced and the debonding of the conductive paints is prevented as well.

To achieve the above-mentioned features, this invention is constituted of the following methods of application (I), (2), and (3).

(I) The system is constituted of the first conductive layer which is coated on the outer side of the electric insulator mounted at the surface of the object such as ships, marine structures contacting with seawater and is composed of thin sheet of metals having low specific resistance or metal oxide, spray-coated layer, and evaporated layer such as Physical Vapor Deposit membrane (PVD membrane) and Chemical Vapor Deposit membrane (CVD membrane), or fused layer; the second conductive antifouling layer having a higher electric resistance than the first conductive layer which is coated on the outer side of the above first conductive layer and which is composed of the oxidation-resistant insoluble substance and the organic binder; and a power source (power supply equipment) connected between the first conductive layer and an electric conductor, which supplies direct currents flowing from the first conductive layer through the second conductive layer toward the electric conductor made of iron, copper or carbon located in seawater and opposite the second conductive membrane. The functions and effects obtained by this invention include, in the anti-fouling system using conductive membrane, the prevention of rise in resistance due to consumption of the conductive membrane and the solution of the problem of non-uniforming of electric current distribution due to irregularity of thickness of the conductive membrane, and a high anti-fouling performance by using the low-resistant conductive membrane as well.

(2) The system is constituted of the first conductive membrane which is coated on the outer side of the electric insulator mounted at the surface of the objects such as ships, marine structures in contact with seawater and is composed of thin sheet of metals having low specific resistance, or metal oxide, spray-coated layer, evaporated or fused layer, and is divided into multiple parallel stripes; the second conductive anti-fouling layer having higher electric resistance than the first conductive layer which is coated on the outer side of the above first conductive layer and is composed of the oxidation-resistant insoluble substance and the organic binder, which is also divided into multiple parallel stripes; and a direct current power source having polarity reversing switching circuit that supplies electric currents in seawater alternatively flowing from the anode which is arbitrarily selected an end of a stripe of the above first conductive layer to the cathode which is also arbitrarily selected an end of another contiguous stripe of the first conductive layer.

The functions and effects in this invention are in that by adapting this constitution, the electric current in seawater can be supplied, as an anode, to one of the multiple strip conductive layer and as a cathode to another of the divided layer and, moreover, both or either of the anode and the cathode can be switched to other strip conductive layers timely and suitably without having a new cathode conductor equipped separately, resulting in a reduction of used electric currents and in an increase of the effective fouling length.

(3) In the above (l) and (2), the first conductive layer is characteristic in that it is formed in a strip or lattice shape. The effects in this invention lies in that by adapting this constitution, the application cost of the first conductive layer is reduced and the debonding of the layer can be prevented.

For this reason, the current invention is very useful for inductries.

## 3. BRIEF DESCRIPTION OF THE DRAWINGS:

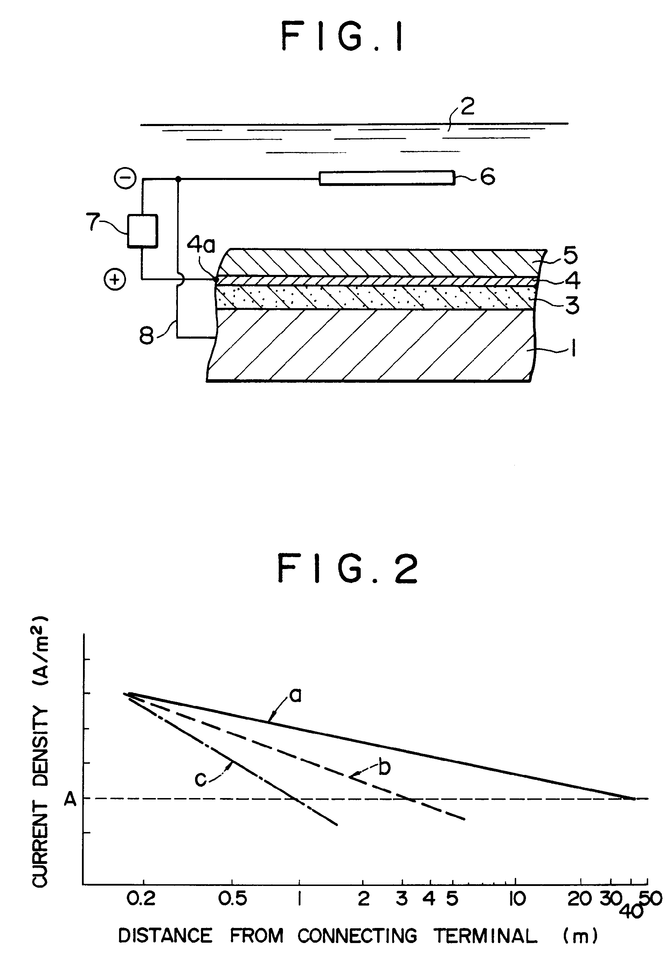

FIG. l shows an illustration of the first embodied example of the anti-fouling system for objects in contact with seawater of the present invention and FIG. 2 is a diagram showing the conductive effective distance in the above system in comparison with conventional equipments.

FIG. 3 is the second embodied example of this invention and general oblique view illustrating application of conductive layer to a structure. FIG. 4 is a local enlarged view of FIG. 3.

FIG. 5 is the third embodied example of application of this invention to steel structures. FIG. 6 is a horizontal sectional view of FIG. 5 by the VI-VI lines. FIG. 7 is a frontview showing the basic test instructions in sea shown in FIG. 5. FIG. 8 is a horizontal sectional view showing a modification of FIG. 6. FIG. 9 is a modification of FIG. 5.

FIG. l0 is an illustration showing a conventional anti-fouling system.

## 4. DETAILED DESCRIPTION OF PREFERRED EMBODIMENTS:

The examples of embodiments of the anti-fouling system for substances in contact with seawater are described by referring to drawings below.

EXAMPLE I

FIG. l is an illustration of the example and FIG. 2 is a diagram of the conductive effective distance of the conductive layer in comparison with the conventional system.

In FIG. l, the number l shows a steel plate constituting an outer plate of the structure in contact with seawater; 3 showing an insulating layer composed of epoxy resin which is coated on the outer side of the steel plate l and 4 showing the first conductive layer composed of the thin plate of metals having low specific resistance or metal oxide, spray-coated fused or evaporated layer which is coated on the outer side of the insulating layer 3, and on one end of which a connecting terminal 4a is mounted.

As metals having low specific resistance, nickel, copper, titanium aluminium, niobium and the like can be used. As metal oxide, magnetite, manganese dioxide and the like can be used.

5 shows the second conductive layer composed of oxidation-resistant insoluble substance and organic binder which is coated on the outer side of the first conductive layer 4. As the oxidation-resistant insoluble substances, graphite, carbon black, magnetite, platinum and the like can be used. As the organic binders, epoxy resin, vinyl resin, unsaturated polyester resin and the like can be used. This second conductive layer 5 has higher electric resistance than the first conductive layer 4.

6 shows a cathode electrode composed of iron, copper or carbon which is equipped in seawater 2 opposite the second conductive layer 5; 7 showing an electric power supply equipment connected between the connecting terminal 4a of the first conductive layer 4 and the cathode electrode 6, which supplies the direct currents from the first conductive layer 4 through the second conductive layer 5 toward the cathode electrode 6. 8 is a lead line to connect the steel plate I with the cathode electrode 6.

In this system, when the direct currents are supplied from the first conductive layer 4 through the second conductive layer 5 toward the cathode electrode 6 in seawater, the surface of the second conductive layer 5 is covered with a membrane containing the effective ingredients having a preventive effect on adhesion of marine organism.

In this system, the direct currents are supplied from the connecting terminal 4a connected to the first conductive layer 4 through the first conductive layer 4 having low electric resistance in the direction of thickness of the second layer 5. Therefore, there is no concentration of electric current density near to the connecting terminal 4a even in the exhaustion of the second conductive layer 5. For this reason, stable and uniform distribution of electric current density is maintained for a long period resulting in a high performance of anti-fouling with less power consumption.

With the lead line 8, the steel plate I is connected so as to be in the (-) electric potential and both the first conductive layer 4 and the second conductive layer 5 are connected so as to be in the (+) electric potential, and therefore, when the exposed surface appears on the steel plate I due to local damages on the first conductive layer 4 and the second conductive layer 5, a part of direct currents flowed out from the conductive layer 4 and 5 flows into the exposed surface of the steel plate I, from which the currents are returned to the cathode of the direct current power supply equipment 7 by which the corrosion of the steel plate I is prevented.

In consideration of the case where the second conductive layer 5 is damaged and the exposed surface of the first conductive layer 4 appears, in order to prevent chemical elusion, the adaption of titanium, niobium, metal oxide and the like as the materials for the first conductive layer 4 is effective for long and stable operation of this system.

Further, in this system, the electric resistance $R_4$ in parallel with the steel plate I of the first conductive membrane is lower than the resistance $R_5$ in parallel with the second conductive membrane 5, and therefore, in order to achieve uniforming of electric current density distribution by supplying about 95% of current flowed from the connecting terminal 4a through the first conductive membrane 4, $(R_4/R_5) \leq 0.1$ is preferable. Moreover, when the thickness of the first conductive 4 and the second conductive layer 5 is determined, the volume resistivity as well as damages due to the current supply through the conductive membrane 5 and external circumstances must be taken into consideration.

Especially, to apply this invention to large-scaled structures, the resistance of the first conductive membrane must be lower than that of the second metal conductive layer composed of metals having low specific resistance or metal oxide and the organic binder. For this reason, although the there is a metal-thin-plate attaching method for the above purpose, spray-coating is the most effective layer forming method when easiness of fabrication and practicality are considered.

FIG. 2 shows a test example where the effective conductive distance from the connecting terminal of the conductive layer in this invention is compared with that in the conventional equipment. The conditions of each conductive layer is as below.

Equipment in this invention:

First conductive layer:     resistance $1.6 \times 10^{-3}\Omega$-m,
                            thickness of layer 20 $\mu$m
Second conductive layer:    resistance $30\Omega$-m,
                            thickness of layer 200 $\mu$m

Conventional equipment:

Conductive layer:     resistance $3\Omega$-m,
                      thickness of layer: 200 $\mu$m

Thus, when 80 mA of currents are supplied from the connecting terminal to such conductive layer, although the effective length, in the conventional equipment(b), to maintain required electric current density A is 3 m, it is 45m in this equipment of the current invention. When the thickness of the second conductive layer in the system of the current invention is changed from 200 μm to l00 μm, no change in the effective length is found, however, it is reduced to l m in the conventional system as the (c) line shows.

EXAMPLE 2

The example shows an improvement in which the application cost is reduced more than in EXAMPLE l and the conductive layer is coated by a spray-coating method and the debonding of spray-coated layer due to residual stress is prevented.

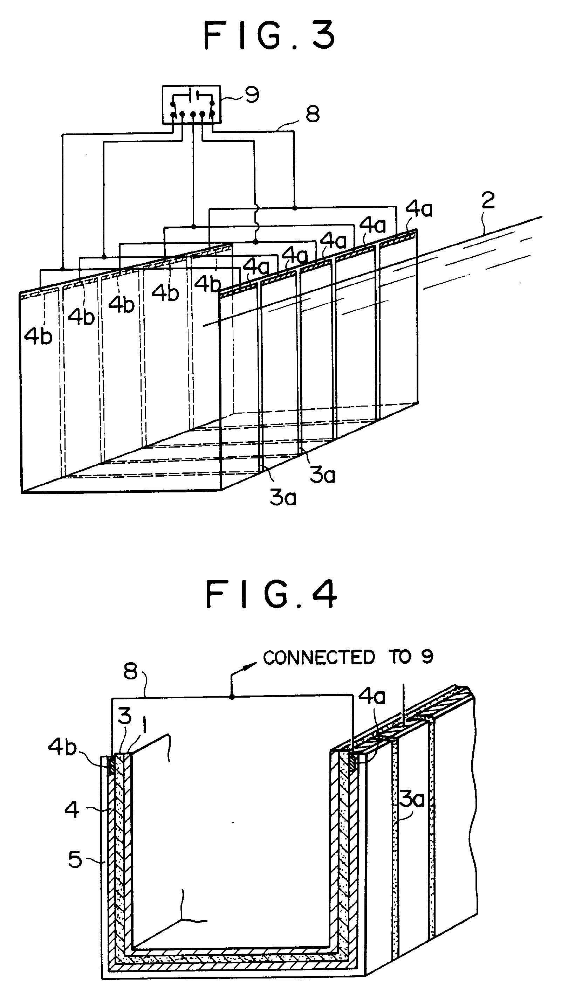

FIG. 3 is a general oblique view. FIG. 4 is a local enlarged view. In these figures, the numbering of the same one as FIG. l shows the same material numbered in FIG. l. 3 is an insulating layer and 3a is an insulating layer which partitions the strip conductive layer 4 into multiple stripes to be described later. 4 shows the first conductive layer, as shown in EXAMPLE l, composed of metals having low specific resistance, the thin plate of metal oxide, the spray-coated layer, the fused layer and evaporated layer, which is coated on the outer side of the insulating layer 3. The first conductive layer 4 is formed on the insulating layer 3 in multiple longitudinal strip in parallel with each other at short interval and the adjoining strip conductive layer 4 is partitioned by the insulating layer 3a. 4a and 4b are connecting terminals respectively mounted on both ends of strip conductive layer 4.

5 is the second conductive layer coating the outer side of each strip conductive layer 4, which is composed of oxidation-resistant insoluble substance and the organic binder. As the oxidation-resistant insoluble substance, graphite, carbon black, magnetite and platinum can be used and, as the organic binder, various resins as described above can be used. Moreover, the electric resistance of the second conductive layer 5 is higher than that of the first conductive layer 4.

Further, 9 is a direct current power supply equipment having a function (e.g. polarity reversing switch) of switching the anode and the cathode at a fixed interval for two strip conductive layers 4, 4. Thus, the direct current are supplied to each part of partitioned conductive layers 4, 4 as the anode and the cathode alternatively. Here, the direct current, as shown in FIG. 3, flow from connecting terminals 4a, 4b connected to one division used as the anode, of the strip divided conductive layer 4 to connecting terminals 4a, 4b connected to another division used as the cathode, of the divided conductive layer 4. In this mechanism, the electrolytic reaction progresses on the surface of the strip conductive layer 4 used as the anode to produce the effective antifouling chemical (hypochlorous acid) on the surface of the layer for prevention of adhesion of marine organism. By reversing the strip conductive layer 4 for the anode or cathode in a fixed cycle, the anti-fouling effect is achieved on the whole surface of the layer, and by partitioning the membrane into multiple strips and combining the anode and cathode, more economical anti-fouling system is achieved.

By adapting this constitution, the additional cathode electrode is not required to be installed opposite the structures and further the current can be reduced by divisioning of the surface to which the current is supplied resulting in reduction of capacity of the direct current power supply equipment and of the required costs.

EXAMPLE 3

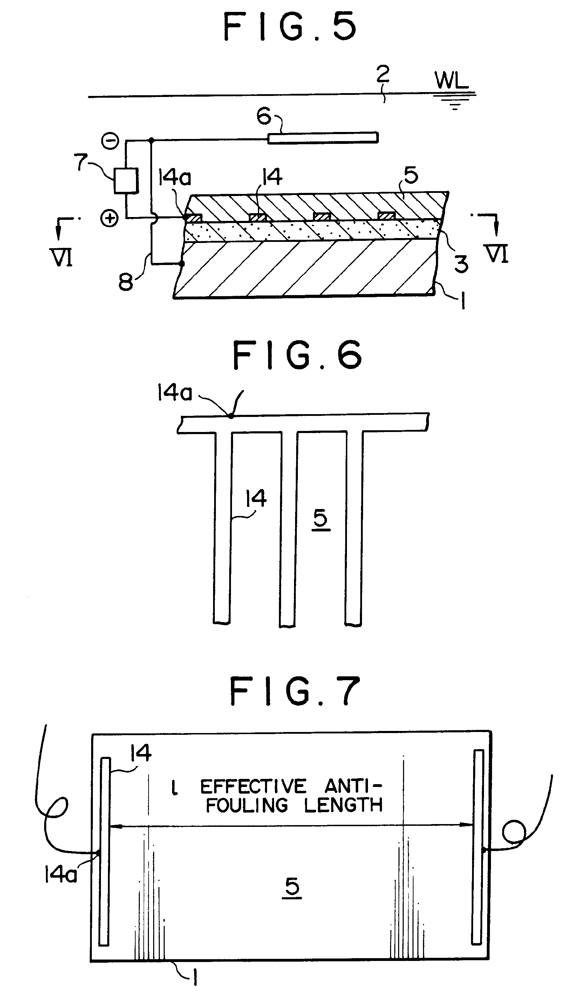

FIG. 5 to FIG. 9 illustrates the examples in which the current invention is applied to steel structures and the same numbers as in FIGS. l and 2 represent the same parts or meterials as in these figures. In an illustration of FIG. 5 and in horizontal sectional view of FIG. 6, 14 shows the first conductive layer coated on the insulating layer 3 in multiple and parallel strips, on one end of which the connecting terminal 14a is connected and the material of which is the same as in the first conductive layer 4 described above and, in this example, spray-coated metal thin plates composed of metal oxide is used in consideration of workability. 5 shows the second conductive layer coating the outer side of the first conductive layer l4, the material of which is the same as in the second conductive layer.

In this system, because the first conductive layer l4 is equipped in multiple and parallel strips, the quantity of materials of the layer can be saved to several tens percent of the first conductive layer 4 in the previous example where the layer is coated generally without being partitioned. Moreover, the first conductive layer l4 is in strip shape with narrow width and, therefore, residual stress at edges on both sides of each strip is reduced. Further, because the second conductive layer is conductive itself, even if the first conducive layer l4 is not formed generally, the currents can be supplied to the second conductive layer 5 generally.

A pair of the first conductive layers l4 in the right and the left to which the current are supplied through the connecting terminal l4a equipped on the steel plate l, which was coated with the second conductive layer 5, is hung on from a raft on the sea for a testing to confirm the effectiveness as shown in the front view of FIG. 7. The result shows that the effective anti-fouling length was l m wherein the direct current of current density of

I A/m² and less were supplied from the first conductive layer I4 spray-coated with aluminium to the second conductive layer 5 of thickness of 300 μm which is composed of the mixture of vinyl resin paint with graphite powder in particle diameter of 45 μm and less with a mixing rate of I00:40 in volume concentration.

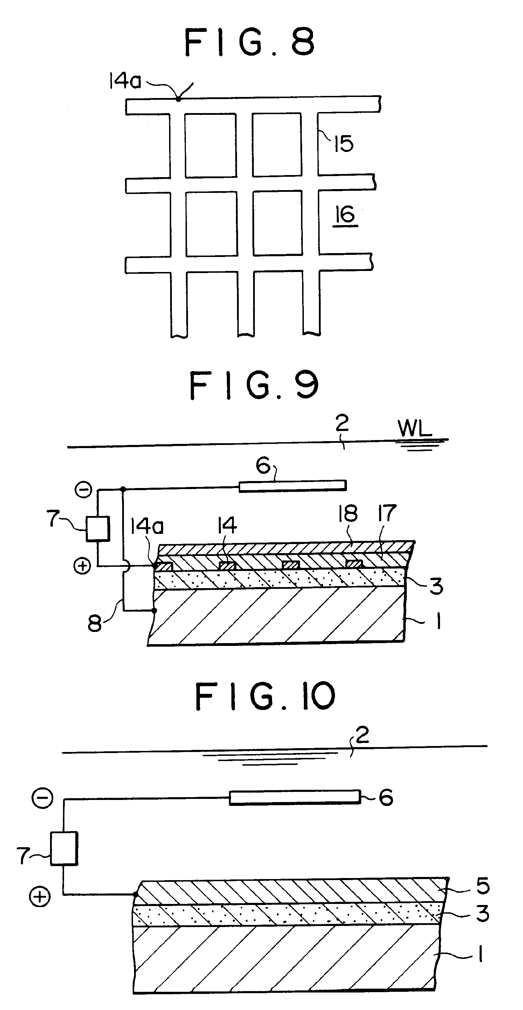

A horizontal sectional view of FIG. 8 is a modification of FIG. 6 in which I5 shows the first conductive layer coated on the insulating layer 3 in lattice vertically and horizontally at suitable interval, on one end of which the connecting terminal I4a is connected; 16 shows the second conductive layer coating on the outer side of the first conductive layer I5. Thus, the same effects are practically performed in this modification as in EXAMPLE 3. If a part of the first conductive layer I5 should be cut away by external strength, a bypass is automatically formed to let the current be supplied to downstream side of the circuit.

An illustration of FIG. 9 is a modification of FIG. 5 in which I7 shows the lower layer of the second conductive layer composed of the paint wherein the quantity of the conductive paint made of metal, graphite and oxidation-resistant insoluble substance is increased to reduce the resistance of the second conductive layer, which was coated directly on the first conductive layer I4. I8 shows the upper layer of the conductive layer composed of the paint wherein the quantity of the paint is reduced to increase the airtightness of the layer, which is coated, to improve the electrolysation-resistance of the second conductive layer, on the lower layer I7 of the conductive layer. Thus, in the modification, the same effects can be practically performed as in the above example and the resistance of the second conductive layer is decreased and the interval in parallel of the first conductive layer I4 is increased.

In this connection, the basic test in seawater in the same way as in FIG. 7 was executed wherein the lower layer I7 of thickness of 200 μm of the second conductive layer composed of the mixture of acrylic resin with graphite powder in particle diameter of 45 μm and less, as the conductive paint, with a mixing rate of I00:60 in volume concentration was coated with the upper layer 18 of thickness of 200 μm of the second conductive layer composed of the mixture of vinyl resin with graphite powder in particle diameter of 45 μm and less with a mixing rate of I00:40 in volume concentration. The result showed that the effective anti-fouling length I was 5 m.

In the above experiment, when the lower layer 17 of the second conductive layer was composed of the mixture of the acrylic resin with copper powder with a mixing rate of I00:30 in volume concentration and with thickness of 200 μm, the effective anti-fouling length I was I5 m.

As explained in these examples and modifications, the following effects are achieved by the current invention.

(I) By having the first conductive layer shaped in multiple parallel strip or lattice, the application area of the first conductive layer can be reduced to several tens percent compared with that of general application of the membrane and accordingly the cost for the system is reduced as well.

(2) By having the first conductive layer shaped in multiple parallel strip or lattice, the width dimension of the first layer can be made short and the residual stress is not generated at edges on both sides and therefore, there is no fear of debonding of the first conductive layer.

## Claims

I) The anti-fouling system for objects in contact with seawater comprising a first (4) conductive layer which is coated on the outer side of the electric insulator (3) mounted at the surface of objects (I) such as ships, marine structures contacting with seawater and said first conductive layer is composed of thin sheet of metals having low specific resistance or metal oxide, spray-coated, evaporated or fused layer; a second conductive anti-fouling layer (5) having higher electric resistance than the first conductive layer (4) which is coated on the outer side of the above first conductive layer (4) and which is composed of the oxidation-resistant insoluble substance and the organic binder; an electric conductor made of iron (6), copper or carbon located in seawater (2) and opposite the second conductive layer (5); and a power source (7) connected between the first conductive layer (4) and the electric conductor (6), which supplies direct current flowing from the first conductive layer (4) through the second conductive layer (5) toward the electric conductor (6).

2) The anti-fouling system for objects in contact with seawater comprising a first conductive layer (4) which is coated on the outer side of the electric insulator (3) mounted at the surface of objects (1) such as ships, marine structures in contact with seawater and said first conductive layer is composed of thin sheet of metal having low specific resistance, or metal oxide, spray-coated, evaporated or fused layer, and is divided into multiple parallel stripes a second conductive anti-fouling layer (5) having higher electric resistance than the first conductive layer (4) which is coated on the outer side of the above first conductive membrane and is composed of the oxidation-resistant insoluble substance and the organic binder, which is also divided into multiple parallel stripes; an insulating portion between contiguos stripes (3a); and a direct current power source having a polarity switching circuit (9) that supplies electric current in seawater (2) alternatively flowing from the anode which is arbitrarily selected at an end of one stripe of the above first conductive layer (4) to the cathode which is also arbitrarily selected at an end of another stripe of the first conductive layer (4).

3) The anti-fouling system for objects (1) in contact with seawater (2), as claimed in claim I and 2 wherein the above first conductive layer (4) is formed in strips and lattice (16).

**Patentansprüche**

I. Anwuchsverhütende Vorrichtung für mit Meerwasser in Kontakt stehende Objekte mit folgenden Merkmalen:

einer ersten leitenden Schicht (4), welche auf der äußeren Seite des elektrischen Isolators (3) aufgetragen ist, der an der Oberfläche von Objekten (I), insbesondere von Schiffen und Meereskonstruktionen, welche mit Meerwasser in Kontakt stehen, befestigt ist, wobei die erste leitende Schicht aus dünnen Metalllamellen, mit geringem spezifischen Widerstand oder einer metalloxidischen, spritzaufgetragenen, aufgedampften oder aufgeschmolzenen Schicht besteht;

einer zweiten leitenden anwuchsverhütenden Schicht (5) mit einem größeren elektrischen Widerstand als bei der ersten leitenden Schicht (4), welche auf der äußeren Seite der ersten leitenden Schicht (4) aufgetragen ist und welche aus der oxidationsresistenten unlöslichen Substanz und dem organischen Bindemittel besteht;

einem aus Eisen, Kupfer oder Kohlenstoff hergestellten elektrischen Leiter (6), welcher im Meerwasser (2) und gegenüber der zweiten leitenden Schicht (5) angeordnet ist, und einer Stromquelle (7), die zwischen der ersten leitenden Schicht (4) und dem elektrischen Leiter (6) angeschlossen ist, welche einen direkten Strom liefert, der von der ersten leitenden Schicht (4) durch die zweite leitende Schicht (5) zum elektrischen Leiter (6) fließt.

2. Anwuchsverhütende Vorrichtung für mit Meerwasser in Kontakt stehende Objekte mit folgenden Merkmalen:

einer ersten leitenden Schicht (4), welche auf der äußeren Seite des elektrischen Isolators (3) aufgetragen ist, der an der Oberfläche von Objekten (I), insbesondere von Schiffen und Meereskonstruktionen, welche mit Meerwasser in Kontakt stehen, befestigt ist, wobei die erste leitende Schicht (4) aus dünnen Metalllamellen mit geringem spezifischen Widerstand oder einer metalloxidischen, spritzaufgetragenen, aufgedampften oder aufgeschmolzenen Schicht besteht und in viele parallele Streifen aufgeteilt ist;

einer zweiten leitenden anwuchsverhütenden Schicht (5) mit einem größeren elektrischen Widerstand als bei der ersten leitenden Schicht (4), welche auf der äußeren Seite der ersten leitenden Schicht aufgetragen ist und welche aus oxidationsresistenten unlöslichen Substanz und dem organischen Bindemittel besteht und welche ebenfalls in viele parallele Streifen aufgeteilt ist;

einem Isolator zwischen benachbarten Streifen (3a);

und einer direkten Stromquelle, die einen Polaritätsschaltkreis (9) aufweist, der einen elektrischen Strom in das Meerwasser (2) liefert, welcher alternativ von der Anode, die willkürlich an einem Ende eines Streifens der ersten leitenden Schicht (4) ausgewählt wird, zur Kathode fließt, welche ebenfalls willkürlich an einem Ende eines anderen Streifens der ersten leitenden Schicht (4) augewählt wird.

3. Anwuchsverhütende Vorrichtung für mit Meerwasser in Kontakt stehende Objekte nach Anspruch I oder 2,

**dadurch gekennzeichnet,**

daß die obige erste leitende Schicht (4) als Streifen und Gitter (I6) ausgebildet ist.

**Revendications**

1. Système contre les salissures pour des objets en contact avec l'eau de mer, comprenant une première couche conductrice (4) qui est appliquée sur la face externe de l'isolateur électrique (3) monté à la surface d'objets (1), tels que des navires, des structures marines, en contact avec l'eau de mer, et ladite couche conductrice étant constituée d'une feuille mince de métal ayant une faible résistance spécifique ou d'un oxyde métallique, d'une couche appliquée par pulvérisation, d'une couche appliquée par vaporisation, ou d'une couche appliquée par fusion, une seconde couche conductrice contre les salissures (5) ayant une résistance électrique plus élevée que la première couche conductrice (4), qui est appliquée sur la face externe de ladite première couche conductrice (4) et qui est constituée d'une substance insoluble résistant à l'oxydation et d'un liant organique ; un conducteur électrique (6) réalisé en fer, cuivre ou carbone, situé dans l'eau de mer (2) et de façon opposée à la seconde couche conductrice (5), et une source de puissance (7) reliée entre la première couche conductrice (4) et le conducteur électrique (6), qui fournit un courant continu s'écoulant de la première couche conductrice (4) via la seconde couche conductrice (5) vers le conducteur électrique (6).

2. Système contre les salissures pour des objets en contact avec l'eau de mer, comprenant une première couche conductrice (4) qui est appliquée sur la face externe de l'isolateur électrique (3) monté à la surface d'objets (1), tels que des navires, des structures marines, en contact avec l'eau de mer, et ladite première couche conductrice étant constituée d'une feuille mince de métal ayant une faible résistance spécifique, ou d'un oxyde métallique, d'une couche appliquée par pulvérisation, d'une couche appliquée par vaporisation, ou d'une couche appliquée par fusion, et étant divisée en multiples bandes parallèles, une seconde couche conductrice contre les salissures (5), ayant une résistance électrique plus élevée que la première couche conductrice (4), qui est appliquée sur la face externe de ladite première couche conductrice et est constituée d'une substance insoluble résistant à l'oxydation et d'un liant organique, qui est également divisée en multiples bandes parallèles, une isolation entre des bandes contiguës (3a), et une source de puissance à courant continu ayant un circuit de commutation de polarité (9) qui fournit du courant électrique dans l'eau de mer (2) s'écoulant alternativement depuis l'anode qui est arbitrairement choisie à une extrémité d'une bande de ladite première couche conductrice (4) vers la cathode qui est également arbitrairement choisie à une extrémité d'une autre bande de la première couche conductrice (4).

3. Système contre les salissures pour des objets (1) en contact avec l'eau de mer (2), comme revendiqué dans les revendications 1 et 2, dans lequel ladite première couche conductrice (4) est constituée de bandes ou d'un réseau (16).

# F I G . 1

# F I G . 2

DISTANCE FROM CONNECTING TERMINAL (m)

# FIG.3

# FIG.4

CONNECTED TO 9

# F I G . 5

# F I G . 6

# F I G . 7

L EFFECTIVE ANTI-
FOULING LENGTH

# F I G . 8

# F I G . 9

# F I G . 10